# EUROPÄISCHE PATENTSCHRIFT

(11) **EP 2 762 267 B1**
(45) Veröffentlichungstag und Bekanntmachung des Hinweises auf die Patenterteilung: **19.07.2017**
(21) Anmeldenummer: 13195048.7
(22) Anmeldetag: 29.11.2013
(51) Int. Cl.: B23Q 1/03, B25B 11/00

(54) **Spannvorrichtung**
Clamping device
Dispositif de serrage

(30) Priorität: 04.02.2013 DE 102013201765
(43) Veröffentlichungstag der Anmeldung: 06.08.2014
(73) Patentinhaber: J. Schmalz GmbH, 72293 Glatten (DE)
(72) Erfinder: Stockburger, Ralf, 72293 Glatten (DE); Conzelmann, Timo, 72293 Glatten (DE)
(74) Vertreter: DREISS Patentanwälte PartG mbB

(56) Entgegenhaltungen:
- EP-B1- 1 256 421
- DE-C1- 19 702 848

## Beschreibung

Die Erfindung betrifft eine Spannvorrichtung gemäß dem Oberbegriff des Patentanspruchs 1 zum Spannen und Greifen unebener Werkstücke, zum Beispiel Kfz-Karosserieteile oder Fahrzeugscheiben, mit einem Hubmodul und wenigstens zwei in diesem Hubmodul angeordneten Hubzylindern. Eine derartige Spannvorrichtung geht beispielsweise aus der DE 197 02 848 C1 hervor. Spann- oder Greifvorrichtungen sind in den unterschiedlichsten Ausgestaltungen bekannt, z.B. aus der DE 41 34 273 A1 und der DE 197 02 848 C1. Die US 2006 0267262 A1 zeigt ebenfalls eine Haltevorrichtung mit mehreren Hubzylindern. Aus der DE 10 2005 022 887A1 ist eine Vorrichtung bekannt, bei welcher an einer Trägerplatte eine Vielzahl von Stößeln angebracht sind, deren freie Enden mit Saugern bestückt sind. Um diese Stößel an eine gewölbte Fläche eines Werkstücks anlegen zu können, weisen die Stößel einen Linearantrieb auf, mit welchem sie mehr oder weniger weit aus der Trägerplatte ausgefahren werden können. Auf diese Weise wird die Vorrichtung auch an unterschiedlich geformte Werkstücke angepasst. Als nachteilig wird hierbei angesehen, dass jeder Stößel mit einem eigenen Antrieb versehen werden muss.

Die EP 0 646 438 B1 zeigt einen Arbeitstisch mit eine Vielzahl von Hubstempeln mit Saugern, die mittels individuell ansteuerbaren Zylindertrieben ausgefahren werden können. Aus der EP 0 507 033 B1 ist ebenfalls eine Vorrichtung zur Abstützung von Werkstücken bekannt geworden, bei welcher die einzelnen Stößel mittels einer jeweils eigenen Spindel in der Höhe einstellbar sind. Mit der DE 103 50 572 A1 ist ein Aufspanntisch bekannt geworden, der ebenfalls eine Vielzahl von Teleskoprohreinheiten aufweist, die jeweils eine integrierte Spindel und einen Antrieb für die Spindel aufweisen. Schließlich ist aus der EP 1 256 421 B1 ein Sauggreifer mit einstellbaren Anschlägen bekannt. Allen diesen Vorrichtungen haftet der Nachteil an, dass eine große Anzahl von Antrieben erforderlich ist, mit denen die einzelnen Stößel und Zylinder in die zum Greifen der gekrümmten Oberfläche des Werkstücks erforderliche Lage bringbar sind. Hierdurch wird nicht nur das Gewicht der Vorrichtung erhöht, auch die Ansteuerung ist aufwändig. Schließlich sind derartige Vorrichtungen teuer und zeitintensiv im Aufbau und der Montage.

Der Erfindung liegt daher die Aufgabe zugrunde, eine Spannvorrichtung bereit zu stellen, die einen einfachen Aufbau aufweist und leicht ist.

Diese Aufgabe wird mit einer Spannvorrichtung der eingangs genannten Art durch die Merkmale des Anspruchs 1 gelöst.

Die erfindungsgemäße Spannvorrichtung besitzt den wesentlichen Vorteil, dass lediglich eine Einstellvorrichtung erforderlich ist, mit der die wenigstens zwei Hubzylinder verfahren werden können. Es ist also nicht jeder einzelne Zylinder mit einer Einstelleinrichtung, welche den Hubzylinder in die gewünschte Lage verfährt, ausgestattet, wodurch die Spannvorrichtung einen wesentlich einfacheren Aufbau aufweist, als die aus dem Stand der Technik bekannten Vorrichtungen. Ferner benötigt die erfindungsgemäße Spannvorrichtung weniger Energie, und ist insgesamt preiswerter. Ein weiterer Vorteil wird darin gesehen, dass die erfindungsgemäße Spannvorrichtung sicherer ist, da die Ausfallwahrscheinlichkeit der die Hubzylinder verfahrenden Antriebe geringer ist, da lediglich ein einziger Antrieb vorgesehen ist. Außerdem benötigen die einzelnen Hubzylinder einen kleineren Bauraum, da sie selbst keinen Antrieb aufweisen, so dass die erfindungsgemäße Spannvorrichtung auf eine vorgegebene Fläche mit mehr Hubzylindern ausgestattet sein kann, so dass eine höhere Spann- oder Saugkraft pro Flächeneinheit am Werkstück angreifen kann.

Bei einer Weiterbildung der Erfindung ist vorgesehen, dass die Hubzylinder in der Richtung, in welcher die Einstelleinrichtung die Hubzylinder verfährt, vorgespannt sind. Dies hat zur Folge, dass die Einstelleinrichtung die Hubzylinder nicht aktiv verfahren muss, sondern die Hubzylinder durch Ihre Vorspannkraft selbst tätig der Einstelleinrichtung folgen. Dabei verfährt die Einstelleinrichtung den Hubzylinder in Richtung der Vorspannkraft oder entgegen der Richtung der Vorspannkraft. Die Einstelleinrichtung greift lose oder kraft- oder formschlüssig am Hubzylinder an.

Bei einer einfachen Ausführungsform eilt die Einstelleinrichtung dem Hubzylinder voraus und verhindert dadurch, dass der Hubzylinder in seine vollständig ausgefahrene Position gelangt. Die blockiert also ein vollständiges Ausfahren des Hubzylinders. Erreicht die Einstelleinrichtung die gewünschte Position eines Hubzylinders, dann wird der Hubzylinder in dieser Position arretiert und festgestellt, d.h. blockiert. Verfährt die Einstelleinrichtung dann weiter, folgt der festgestellte Hubzylinder der Einstelleinrichtung nicht mehr sondern verbleibt in seiner festgestellten Position.

Erfindungsgemäß greift am Hubzylinder eine mechanische oder pneumatische, die Vorspannkraft erzeugende Feder an. Insbesondere ist der Hubzylinder als Gasdruck- oder Gaszugfeder ausgebildet oder weist eine Grasdruck- oder Gaszugfeder auf. Gasdruckfedern oder Gaszugfedern sind preiswerte Bauteile, die zuverlässig arbeiten und große Lasten abstützen können. Außerdem sind sie einfach bedienbar, führen gedämpfte Bewegungen aus und können in jeder beliebigen Position festgestellt oder blockiert werden.

Vorteilhaft ist die Vorspannkraft eine Druck- und/oder eine Zugkraft. Dabei kann die Endlage der Hubzylinder entweder in der vollständig eingefahrenen oder in der vollständig ausgefahrenen Position liegen oder die Hubzylinder nehmen in einer mittleren Position ihre Endlage ein, aus der sie entweder herausgedrückt oder herausgezogen werden.

Die Klemmeinrichtung wird bei einer einfacheren Variante mit der Gasdruckfeder realisiert, deren Auslösemechanismus an der Einspannstelle der Gasdruckfeder vorgesehen ist und zum Beispiel mittels eines Elektromagnets betätigbar ist.

Um Werkstücke einfach und schonend greifen zu können, ist der Hubzylinder an seinem freien Ende mit einer Unterdruckgreifeinheit versehen. Diese wird mit Unterdruck versorgt, was ebenfalls durch den Hubzylinder hindurch erfolgen kann.

Eine Weiterbildung der Erfindung sieht vor, dass die Einstelleinrichtung als Hubplatte ausgebildet ist und die Hubplatte an den Hubzylindern angreift, wobei die Hubzylinder über eine an der Hubplatte angreifende Schulter von der Hubplatte verlagerbar sind. Die Schulter ist dabei als Bund ausgebildet, so dass sich der Hubzylinder an der Hubplatte über diese Schulter abstützen kann.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschreibend ist.

In der Zeichnung zeigen:
Figur 1 eine perspektivische Ansicht der erfindungsgemäßen Spannvorrichtung; und
Figur 2 einen Schnitt II - II gemäß Figur 1.

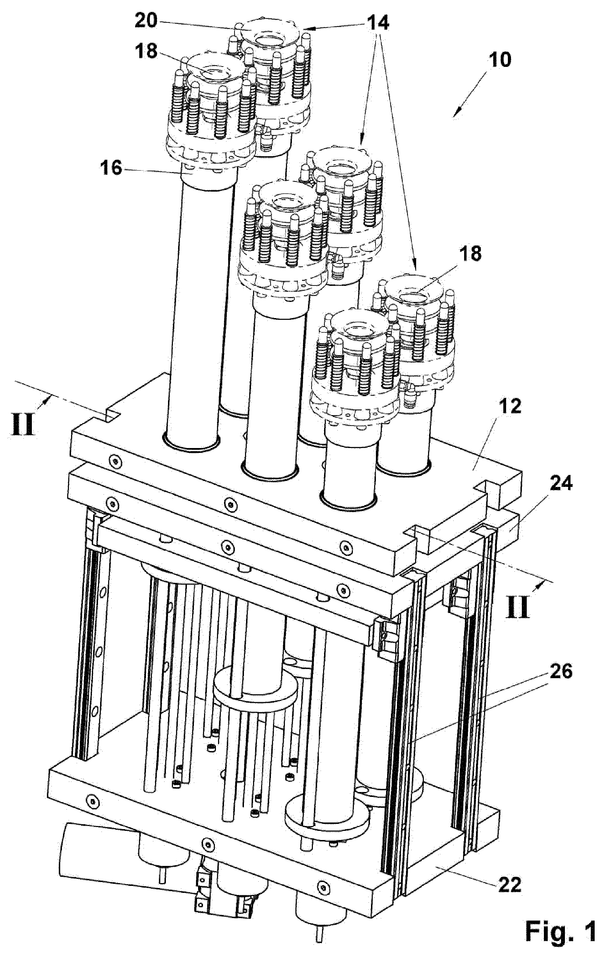

Die Figur 1 zeigt in perspektivischer Ansicht eine insgesamt mit 10 bezeichnete Spannvorrichtung, welche ein Hubmodul 12 aufweist, in dem sechs Hubzylinder 14 verschieblich angeordnet sind. Diese Hubzylinder 14 weisen an ihrem freien Ende 16 jeweils eine Unterdruckgreifeinheit 18 auf, mit welcher ein unebenes Werkstück (nicht dargestellt) gegriffen werden kann. Hierfür ist die Unterdruckgreifeinheit 18 derart im Raum gelenkig drehbar oder schwenkbar ausgestalten, dass sich ein in der Unterdruckeinheit 18 vorgesehener Faltenbalgsauger 10 optimal an die Oberfläche des Werkstücks ansaugen kann.

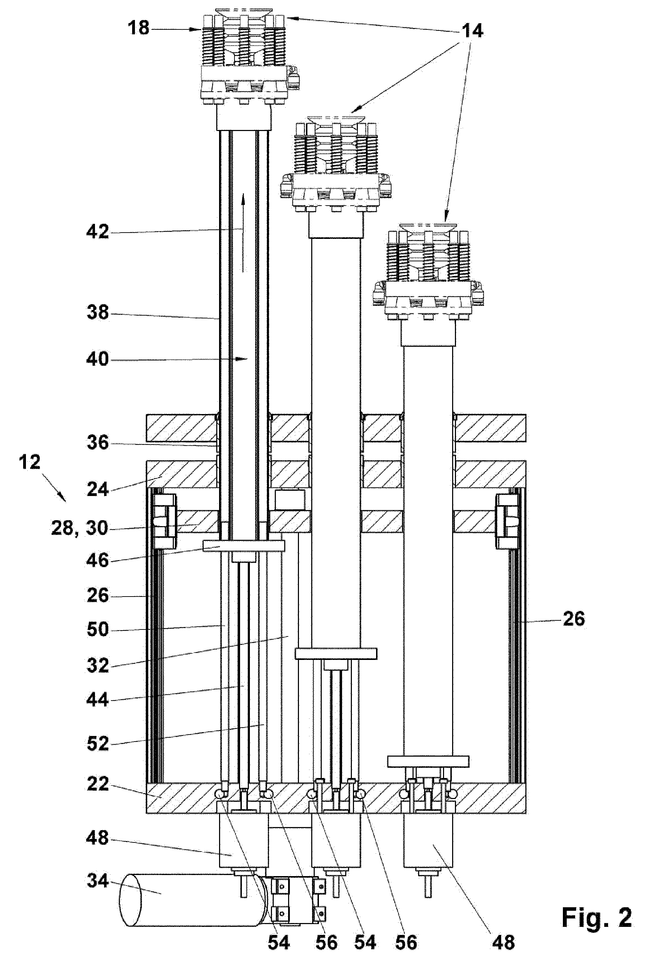

Die Figur 2 zeigt das Hubmodul 12 im Schnitt und es ist erkennbar, dass dieses eine Bodenplatte 22 sowie eine Deckelplatte 24 aufweist, zwischen denen vertikale Führungsschienen 26 angeordnet sind. An diesen Führungsschienen 26 ist eine als Einstelleinrichtung 28 ausgebildete Hubeinstellplatte 30 in vertikaler Richtung verfahrbar geführt. Zum Verstellen dieser Hubeinstellplatte 30 erstreckt sich zwischen der Bodenplatte 22 und der Deckelplatte 24 eine Spindel 32, die über einen Getriebemotor 34 angetrieben wird. An Stelle der Spindel 32 und des Getriebemotors 34 kann auch ein anderer linearer Antrieb verwendet werden, zum Beispiel ein Pneumatik- oder Hydraulikzylinder. In entsprechenden Büchsen 36 sind die Zylinder oder Gehäuse 38 von Hubzylinder 14 bildenden Gasdruckfedern 40 geführt. Die Gasdruckfedern 40 sind derart vorgespannt, dass sie das Gehäuse 38 in Richtung des Pfeils 42 drängen. Dabei stützt sich die Gasdruckfeder 40 mittels eines Kolbens 44 an der Bodenplatte 22 ab. Außerdem ist erkennbar, dass die untere Begrenzung des Gehäuses 38 der Gasdruckfeder 40 von einem umlaufenden Bund 46 gebildet wird, der bei gelöster Gasdruckfeder 40 an der Unterseite der Hubeinstellplatte 30 zu liegen kommt. Das Lösen der Gasdruckfeder 40 erfolgt mittels einer Löseeinheit 48, die auf den Auslösestift der Gasdruckfeder 40 wirkt.

Um die einzelnen Hubzylinder 14 in die gewünschte Position bringen zu können, wird die Hubeinstellplatte 30 vollständig abgesenkt, wodurch die einzelnen Hubzylinder 14 in die Ausgangslage gebracht werden, indem die Hubeinstellplatte 30 die Gehäuse 38 über den Bund 46 in die Position bringen, wie sie in der Figur 2 rechts dargestellt ist. Soll dieser Hubzylinder 14 in dieser Position verbleiben, wird über die Löseeinheit 48 der Auslösestift betätigt und die Gasdruckfeder 40 blockiert in dieser Position. Die Hubeinstellplatte 30 wird anschließend in Richtung 42 verfahren und nimmt dabei die Gehäuse 38 der restlichen Gasdruckfedern 40 mit, die aufgrund der Vorspannkraft alle in Ausschubrichtung (Pfeil 42) drängen. Hat der nächste Hubzylinder 14 seine gewünschte Position erreicht, wird bei diesem Hubzylinder 14 der Auslösestift betätigt und dass Gehäuse 38, wie zum Beispiel in der mittleren Position dargestellt, arretiert. Sodann wird die Hubeinstellplatte 30 weiter in Richtung des Pfeils 42 verfahren, bis wiederum der nächste Hubzylinder 14 seine gewünschte Position erreicht hat. Auf diese Weise werden alle Hubzylinder 14 mittels einer einzigen Einstelleinrichtung 28, nämlich mit der Hubeinstellplatte 30 in die gewünschte Positionen verfahren und dort blockiert. Die Gasdruckfedern 40 können auch so ausgestaltet sein, dass der Auslösestift dann betätigt werden muss, wenn der Zylinder oder das Gehäuse 38 verschoben wird. Alternativ können auch Gaszugfedern verwendet werden. In diesem Falle liegt der Bund des Gehäuses an der Oberseite der Hubeinstellplatte 30 an und die Platte ist oben, wenn Sie ihre Ruhelage einnimmt.

Die einzelnen Unterdruckgreifeinheiten 18 werden durch das Auflegen des Gegenstands ausgerichtet oder sie werden vorab manuell oder maschinell in die gewünschte Richtung gedreht. Dies kann zum Beispiel auch mittels Druckluft oder Unterdruck erfolgen. Oder, wenn sie durch das Auflegen des Werkstücks eingestellt werden, kann diese Position pneumatisch fixiert werden. Hierfür sind innerhalb des Gehäuses 38 zwei Leitungen 50 und 52 vorgesehen, mit denen Druckluft oder ein Unterdruck an die Unterdruckgreifeinheit 18 herangeführt wird. Zur Einleitung der Druckluft beziehungsweise des Unterdrucks ind die Leitungen 50 und 52 weist die Bodenplatte 22 einen Vakuumanschluss 54 beziehungsweise einen Druckluftanschluss 56 auf.

## Patentansprüche

1. Spannvorrichtung (10) zum Spannen und Greifen unebener Werkstücke, zum Beispiel Kfz-Karosserieteile oder Fahrzeugscheiben, mit einem Hubmodul (12) und wenigstens zwei in diesem Hubmodul (12) verschiebbar angeordneten Hubzylindern (14), wobei die Hubzylinder (14) in eine Ausschubrichtung (42) vorgespannt sind, und wobei eine wenigstens zwei der Hubzylinder (14) entgegen der Vorspannkraft verfahrende Einstelleinrichtung (28) vorgesehen ist, **dadurch gekennzeichnet dass** die Hubzylinder (14) in beliebigen Positionen feststellbar sind, wobei jeder Hubzylinder (14) eine Klemmeinrichtung aufweist, die den jeweiligen Hubzylinder (14) an einem Gehäuseabschnitt des Hubmoduls (12) feststellt, derart, dass ein jeweils nicht festgestellter Hubzylinder (14) noch verschiebbar ist.

2. Spannvorrichtung nach Anspruch 1, **dadurch gekennzeichnet, dass** die Einstelleinrichtung (28) lose oder kraft- oder formschlüssig am Hubzylinder (14) eingreift.

3. Spannvorrichtung nach einem der vorhergehenden Ansprüche, **dadurch gekennzeichnet, dass** am Hubzylinder (14) eine mechanische oder pneumatische, die Vorspannkraft erzeugende Feder (40) angreift.

4. Spannvorrichtung nach einem der vorhergehenden Ansprüche, **dadurch gekennzeichnet, dass** der Hubzylinder (14) als Gasdruck- oder Gaszugfeder (40) ausgebildet ist oder eine Gasdruck- oder Gaszugfeder (40) aufweist.

5. Spannvorrichtung nach einem der vorhergehenden Ansprüche, **dadurch gekennzeichnet, dass** die Vorspannkraft eine Druck- und/oder eine Zugkraft ist.

6. Spannvorrichtung nach einem der vorhergehenden Ansprüche, **dadurch gekennzeichnet, dass** der Hubzylinder (14), insbesondere an seinem freien Ende (16), mit einer Unterdruckgreifeinheit (18) versehen ist.

7. Spannvorrichtung nach einem der vorhergehenden Ansprüche, **dadurch gekennzeichnet, dass** die Einstelleinrichtung (28) als Hubeinstellplatte (30) ausgebildet ist und die Hubeinstellplatte (30) an den Hubzylindern (14) angreift, wobei die Hubzylinder (14) über eine an der Hubeinstellplatte (30) angreifende Schulter oder Bunde (46) von der Hubeinstellplatte (30) verlagerbar sind.

## Claims

1. Clamping device (10) for clamping and gripping uneven workpieces, for example vehicle body parts or vehicle windows, comprising a lifting module (12) and at least two lifting cylinders (14) which are arranged so as to be movable in this lifting module (12), the lifting cylinders (14) being preloaded in an extension direction (42) and an adjustment apparatus (28) being provided that moves at least two of the lifting cylinders (14) against the preloading force, **characterised in that** the lifting cylinders (14) can be fixed in any position, each lifting cylinder (14) comprising a fastening apparatus that fixes the lifting cylinder (14) in question to a housing portion of the lifting module (12) such that a lifting cylinder (14) that has not been fixed can still be moved.

2. Clamping device according to claim 1, **characterised in that** the adjustment apparatus (28) loosely or frictionally or form-fittingly acts on the lifting cylinder (14).

3. Clamping device according to any of the preceding claims, **characterised in that** a mechanical or pneumatic spring (40) that generates preloading force acts on the lifting cylinder (14).

4. Clamping device according to any of the preceding claims, **characterised in that** the lifting cylinder (14) is designed as a gas pressure or gas tension spring (40) or comprises a gas pressure or gas tension spring (40).

5. Clamping device according to any of the preceding claims, **characterised in that** the preloading force is a compressive and/or tensile force.

6. Clamping device according to any of the preceding claims, **characterised in that** the lifting cylinder (14) is provided with a vacuum gripping unit (18), in particular on the free end (16) thereof.

7. Clamping device according to any of the preceding claims, **characterised in that** the adjustment apparatus (28) is designed as a lifting adjustment plate (30) and the lifting adjustment plate (30) acts on the lifting cylinders (14), the lifting cylinders (14) being capable of being moved by the lifting adjustment plate (30) by means of a shoulder or collar (46) acting on the lifting adjustment plate (30).

## Revendications

1. Dispositif de serrage (10) destiné à serrer et à saisir des pièces inégales, par exemple des parties de carrosserie de véhicule automobile ou des vitres de véhicule, comprenant un module de montée et descente (12) et au moins deux vérins de montée et descente (14) disposés à déplacement dans ce module de montée et descente (12), dans lequel les vérins de montée et descente (14) sont précontraints dans une direction de sortie (42), et dans lequel un dispositif de réglage (28) est prévu qui déplace au moins deux des vérins de montée et descente (14) à l'encontre de la force de précontrainte, **caractérisé par le fait que** les vérins de montée et descente (14) peuvent être immobilisés dans des positions quelconques, chaque vérin de montée et descente (14) présentant un dispositif de serrage qui immobilise le vérin de montée et descente (14) respectif sur une portion de bâti du module de montée et descente (12) de telle sorte qu'un vérin de montée et descente (14) respectif qui n'est pas immobilisé peut encore être déplacé.

2. Dispositif de serrage selon la revendication 1, **caractérisé par le fait que** le dispositif de réglage (28) se prend de manière lâche ou par adhérence ou à engagement positif sur le vérin de montée et descente (14).

3. Dispositif de serrage selon l'une quelconque des revendications précédentes, **caractérisé par le fait qu'**un ressort (40) mécanique ou pneumatique générant la force de précontrainte se prend sur le vérin de montée et descente (14).

4. Dispositif de serrage selon l'une quelconque des revendications précédentes, **caractérisé par le fait que** le vérin de montée et descente (14) est réalisé en tant que ressort à gaz ou ressort à gaz de traction (40) ou comprend un ressort à gaz ou ressort à gaz de traction (40).

5. Dispositif de serrage selon l'une quelconque des revendications précédentes, **caractérisé par le fait que** la force de précontrainte est une force de pression et/ou une force de traction.

6. Dispositif de serrage selon l'une quelconque des revendications précédentes, **caractérisé par le fait que** le vérin de montée et descente (14) est pourvu, en particulier à son extrémité libre (16), d'une unité de préhension par dépression (18).

7. Dispositif de serrage selon l'une quelconque des revendications précédentes, **caractérisé par le fait que** le dispositif de réglage (28) est réalisé en tant que plaque de réglage de course (30) et la plaque de réglage de course (30) se prend sur les vérins de montée et descente (14), dans lequel les vérins de montée et descente (14) peuvent être déplacés par la plaque de réglage de course (30) par l'intermédiaire d'un épaulement ou collet (46) se prenant sur ladite plaque de réglage de course (30).
